# EUROPÄISCHE PATENTSCHRIFT

(11) **EP 2 718 384 B1**
(45) Veröffentlichungstag und Bekanntmachung des Hinweises auf die Patenterteilung: **03.10.2018**
(21) Anmeldenummer: 12725851.5
(22) Anmeldetag: 07.06.2012
(51) Int. Cl.: C09D 163/00, C09J 163/00, C09D 5/00, C08G 59/50

(54) **WÄSSRIGE HAFTVERMITTLERZUSAMMENSETZUNG AUF BASIS VON EPOXIDHARZ**
AQUEOUS ADHESIVE COMPOSITION BASED ON EPOXIDE RESIN
COMPOSITION D'AGENT ADHÉSIF AQUEUSE À BASE DE RÉSINE ÉPOXY

(30) Priorität: 08.06.2011 EP 11169185
(43) Veröffentlichungstag der Anmeldung: 16.04.2014
(73) Patentinhaber: Sika Technology AG, 6340 Baar (CH)
(72) Erfinder: BURCKHARDT, Urs, CH-8049 Zürich (CH); HUCK, Wolf-Rüdiger, CH-8044 Gockhausen (CH); FÄSSLER, Reto, CH-8048 Zürich (CH); CORSARO, Antonio, CH-8105 Regensdorf (CH)
(74) Vertreter: Sika Patent Attorneys
(86) Internationale Anmeldenummer: PCT/EP2012/060830
(87) Internationale Veröffentlichungsnummer: WO 2012/168385

(56) Entgegenhaltungen:
- WO-A1-01/77202
- US-A- 4 480 083
- US-A1- 2010 297 357
- US-A1- 2011 027 591

## Beschreibung

### Technisches Gebiet

Die Erfindung betrifft das Gebiet der Haftvermittlerzusammensetzungen und deren Verwendung als Voranstriche für Kleb- und Dichtstoffe.

### Stand der Technik

Haftvermittlerzusammensetzungen werden schon seit längerem eingesetzt, um die Haftung von Kleb- und Dichtstoffen auf unterschiedlichen Untergründen zu verbessern. Besonders hohe Anforderungen an die Haftung stellen sich dabei an Verklebungen in der Automobilindustrie, wodurch der Einsatz von Haftvermittlerzusammensetzungen in diesem Bereich weit verbreitet ist.

Solche Haftvermittlerzusammensetzungen enthalten als Lösemittel typischerweise flüchtige organische Verbindungen (VOC), welche bei der Applikation verdampfen und aus Gründen des Umwelt-, Gesundheits- und Arbeitsschutzes nachteilig sind. Es wird deshalb versucht, lösemittelhaltige Haftvermittlerzusammensetzungen durch wässrige zu ersetzen. Wässrige Haftvermittlerzusammensetzungen neigen allerdings dazu, unter feuchtwarmen Bedingungen, beispielsweise bei Kataplasma-Lagerung, ihre Haftung im Klebeverbund wieder zu verlieren. Eine wässrige Haftvermittlerzusammensetzung mit vergleichsweise guter Beständigkeit unter feuchtwarmen Bedingungen ist beispielsweise in WO 2008/037780 beschrieben. Das Dokument US-A-2011/0022791 offenbart eine Zweikomponenten-Haftvermittlerzusammensetzung. Sie stellt ein Zweikomponentensystem bestehend aus einer Epoxidharzdispersion und einem Aminhärter dar. Bei längerer Kataplasma-Lagerung zeigt jedoch auch diese Haftvermittlerzusammensetzung Haftverlust.

### Darstellung der Erfindung

Aufgabe der vorliegenden Erfindung ist es daher, eine Haftvermittlerzusammensetzung bereitzustellen, welche keine oder nur unwesentlich flüchtige organische Verbindungen freisetzt und gleichzeitig nicht zu einem Verlust der Haftung unter feuchtwarmen Bedingungen führt.

Diese Aufgabe wird durch eine erfindungsgemässe Haftvermittlerzusammensetzung nach Anspruch 1 gelöst.

Überraschenderweise und entgegen der Erwartung, dass Verbindungen **V** durch Abblocken von reaktiven Aminogruppen die Vernetzungsdichte der Haftvermittlerzusammensetzung herabsetzen würden, wodurch diese erweichen und quellen könnte, was wiederum gerade bei Belastung des Klebeverbunds unter feuchtwarmen Bedingungen zu Haftverlust sowie zu erhöhtem Auftreten von Korrosion führen könnte, wurde gefunden, dass der Einsatz von spezifischen Verbindungen als Zusatzstoffe in der Haftvermittlerzusammensetzung deren Beständigkeit unter feuchtwarmen Bedingungen signifikant verbessert.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft eine Haftvermittlerzusammensetzung, wie in den vorliegenden Ansprüchen beschrieben, enthaltend
- mindestens eine wässrige Dispersion eines Epoxid-Festharzes;
- mindestens ein Polyamin; sowie
- mindestens eine Verbindung **V** in hydrolytisch freisetzbarer Form, welche mit dem Polyamin eine Kondensationsreaktion eingehen kann.

Mit "Poly" beginnende Substanznamen wie Polyamin oder Polyisocyanat bezeichnen im vorliegenden Dokument Substanzen, die formal zwei oder mehr der in ihrem Namen vorkommenden funktionellen Gruppen pro Molekül enthalten.

Entsprechend werden im vorliegenden Dokument als "Polyamin" Verbindungen verstanden, welche zwei oder mehr Aminogruppen aufweisen.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Als "Kataplasma-Lagerung" wird hier die Lagerung eines Probekörpers bei einer Temperatur von 70°C und einer relativen Luftfeuchtigkeit von 100% bezeichnet.

Unter "Molekulargewicht" versteht man im vorliegenden Dokument stets das Molekulargewichtsmittel Mₙ (Zahlenmittel).

Beim Epoxid-Festharz der wässrigen Dispersion handelt es sich insbesondere um ein Epoxid-Festharz der Formel (I).

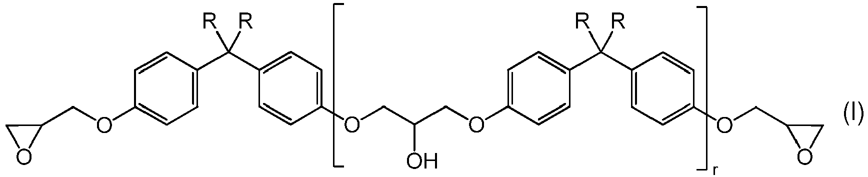

Hierbei stehen die Substituenten R unabhängig voneinander entweder für ein Wasserstoffatom oder eine Methylgruppe. Weiterhin steht der Index r für einen Wert von > 1, insbesondere von ≥ 1.5. Bevorzugt steht r für einen Wert von 2 bis 12.

Typischerweise weist ein Epoxid-Festharz eine Glasübergangstemperatur auf, welche oberhalb der Raumtemperatur von etwa 23°C liegt. Epoxid-Festharze lassen sich somit bei Raumtemperatur zu schüttfähigen Pulvern zerkleinern.

Derartige Epoxid-Festharze sind als solche oder bereits in dispergierter Form beispielsweise kommerziell erhältlich von Dow Chemical Company, USA, von Huntsman International LLC, USA, oder von Hexion Specialty Chemicals Inc, USA.

Weiterhin geeignet sind beispielsweise Epoxid-Festharze, welche zumindest teilweise N-Glycidylgruppen an Stelle von Glycidylethergruppen aufweisen, sowie Epoxidharze auf Basis von aliphatischen Glycidylethern.

Ebenfalls eignen sich Epoxid-Festharze aus der Gruppe der Phenolharze, insbesondere Phenol- oder Kresolnovolake.

Gegebenenfalls enthält die wässrige Dispersion eines Epoxid-Festharzes weitere Bestandteile, wie beispielsweise Epoxid-Flüssigharze, Emulgatoren, Co-Emulgatoren, Entschäumer, Biocide, Pigmente, Füllstoffe, Reaktivverdünner oder Katalysatoren.

Die wässrige Dispersion eines Epoxid-Festharzes weist vorzugsweise einen Gehalt an Epoxid-Festharz von 30 bis 80 Gew.-%, insbesondere 50 bis 70 Gew.-%, auf. Entsprechend weist die wässrige Dispersion eines Epoxidharzes insbesondere etwa 20 bis 70 Gew.-% Wasser auf.

Die mittlere Teilchengrösse der dispergierten Partikel aus Epoxid-Festharz in der Dispersion liegt insbesondere im Bereich von 0.05 bis 20 µm, insbesondere 0.1 bis 10 µm, besonders bevorzugt 0.2 bis 5 µm.

Beispielweise sind geeignete wässrige Dispersionen eines Epoxid-Festharzes unter dem Handelsnamen Waterpoxy® 1422 kommerziell erhältlich von Cognis oder unter dem Handelsnamen Ancarez™ AR555 Waterborne Epoxy Resin von Air Products.

Der Anteil der wässrigen Dispersion eines Epoxid-Festharzes beträgt vorzugsweise 30 bis 99 Gew.-%, insbesondere 40 bis 80 Gew.-%, bezogen auf die gesamte Haftvermittlerzusammensetzung.

Weiterhin umfasst die erfindungsgemässe Haftvermittlerzusammensetzung mindestens ein Polyamin.

Geeignete Polyamine sind beispielsweise beschrieben in der europäischen Patentanmeldung EP09178262.3, deren Inhalt hiermit durch Bezugnahme eingeschlossen wird.

Vorzugsweise ist das Polyamin ein Reaktionsprodukt, insbesondere ein Polyamidoamin oder ein Epoxidharz/Polyamin-Additionsprodukt. Bevorzugt handelt es sich beim Polyamin um ein Polyamidoamin. Beispielsweise sind dies Kondensationsprodukte von Carbonsäuren mit Polyaminen, beispielsweise einer Fettsäure oder einer Polycarbonsäure mit einem Polyalkylenamin.
Besonders geeignete Polyamine sind Additionsprodukte von Epoxidharzen und Polyaminen. Derartige Additionsprodukte lassen sich beispielsweise aus einer Vielzahl möglicher dem Fachmann bekannter Polyamine und Epoxidharzen, insbesondere Bisphenol A-Diglycidylether, erhalten. Hierfür bevorzugte Polyamine sind Ethylendiamin, Isophorondiamin, 2,2,4- und 2,4,4-Trimethylhexamethylendiamin, 1,3-Xylylendiamin, Polyalkylenamine wie Polyethylenamine oder Polyoxyalkylendiamine oder -triamine, insbesondere wie sie unter dem Handelsnamen Jeffamine® von Huntsman erhältlich sind. Bevorzugt handelt es sich beim Reaktionsprodukt um dasjenige eines Diglycidylethers von Bisphenol A und/oder Bisphenol F mit einem Polyoxyalkylendiamin oder Polyoxyalkylentriamin. Ein besonders geeignetes Additionsprodukt ist dasjenige, welches in EP 0567831 als Bis(diamin)-di-epoxidaddukt beschrieben ist.

Es ist durchaus möglich und kann sogar von Vorteil sein, eine Mischung verschiedener Polyamine in der erfindungsgemässen Haftvermittlerzusammensetzung einzusetzen. Gegebenenfalls können auch Mischungen von Polyaminen mit Mercaptogruppen aufweisenden Verbindungen eingesetzt werden.

Der Anteil des Polyamins ist insbesondere so gewählt, dass in der Haftvermittlerzusammensetzung das Verhältnis von Aminogruppen zu Epoxidgruppen im Bereich von 0.1:1 bis 1:1 beträgt.

Vorzugsweise beträgt der Anteil des Polyamins 1 bis 40 Gew.-%, insbesondere 5 bis 20 Gew.-%, bezogen auf die gesamte Haftvermittlerzusammensetzung.

Weiterhin umfasst die erfindungsgemässe Haftvermittlerzusammensetzung mindestens eine Verbindung **V** in hydrolytisch freisetzbarer Form, welche mit dem Polyamin eine Kondensationsreaktion eingehen kann.

Die Verbindung **V** ist in hydrolytisch freisetzbarer Form in der Haftvermittlerzusammensetzung Als Verbindungen, welche eine Verbindung **V** nach der Hydrolyse freisetzen, eignen sich Aldimine, Enamine oder Oxazolidine.

Bevorzugt handelt es sich bei der Verbindung **V** in hydrolytisch freisetzbarer Form um ein Aldimin der Formel (VIII),

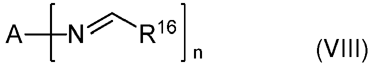

Dabei steht n für einen Wert von 1 bis 4, insbesondere für 2 oder 3.

A steht für einen n-wertigen Kohlenwasserstoffrest mit 2 bis 30 C-Atomen, welcher gegebenenfalls mindestens ein Heteroatom, insbesondere in der Form von Ether-Sauerstoff oder tertiärem Amin-Stickstoff, enthält.

Insbesondere steht A für einen Rest eines Amins nach Entfernung von n Aminogruppen. Bevorzugte Amine sind dabei ausgewählt aus der Gruppe bestehend aus 1,6-Hexamethylendiamin, 1,5-Diamino-2-methylpentan, 1,3-Pentandiamin, Isophorondiamin, 2,2,4- und 2,4,4-Trimethylhexamethylendiamin, 1,3-Xylylendiamin, 1,3-Bis-(aminomethyl)cyclohexan, Bis-(4-aminocyclohexyl)-methan, Bis-(4-amino-3-methylcyclohexyl)-methan, 3(4),8(9)-Bis-(aminomethyl)-tricyclo[5.2.1.0^{2,6}]decan, 1,2-, 1,3- und 1,4-Diaminocyclohexan, 1,4-Diamino-2,2,6-trimethylcyclohexan, 3,6-Dioxaoctan-1,8-diamin, 4,7-Dioxadecan-1,10-diamin, 4-Aminomethyl-1,8-octandiamin, Polyoxyalkylen-Polyaminen mit zwei oder drei Aminogruppen und einem Molekulargewicht bis 600 g/mol, insbesondere die unter dem Handelsnamen Jeffamine® erhältlichen Typen D-230, D-400 und T-403 von Huntsman und dazu analoge Verbindungen von BASF oder Nitroil; 1,3- und 1,4-Phenylendiamin, 2,4- und 2,6-Toluylendiamin, 4,4'-, 2,4'- und 2,2'-Diaminodiphenylmethan, 3,3'-Dichlor-4,4'-diaminodiphenylmethan und Mischungen der genannten Amine.

R¹⁶ steht für einen Rest eines Aldehyds, wie er vorhergehend beschrieben worden ist, nach Entfernung der Aldehydgruppe.

Weitere geeignete Aldimine sind beispielsweise als Polyaldimine PA beschrieben in WO 2010/112537. Als Aldimin ebenfalls geeignet sind kommerzielle Aldimine, wie beispielsweise Vestamin® A-139 (von Evonik).

Weiterhin bevorzugt handelt es sich bei der Verbindung **V** in hydrolytisch freisetzbarer Form um ein Enamin. Ein solches Enamin ist insbesondere erhältlich aus der Kondensationsreaktion von einem mindestens eine sekundäre Aminogruppe aufweisenden Amin mit mindestens einem Aldehyd, welcher in α-Stellung zur Carbonylgruppe mindestens ein Wasserstoffatom aufweist und damit enolisierbar ist, insbesondere Acetaldehyd, Propanal, 2-Methylpropanal, Butanal, 2-Methylbutanal, 2-Ethylbutanal, Pentanal, 2-Methylpentanal, 3-Methylpentanal, 4-Methylpentanal, 2,3-Dimethylpentanal, Hexanal, 2-Ethylhexanal, Heptanal, Octanal, Nonanal, Decanal, Undecanal, 2-Methylundecanal, Dodecanal, Methoxyacetaldehyd, Cyclopropancarboxaldehyd, Cyclopentancarboxaldehyd, Cyclohexancarboxaldehyd oder Diphenylacetaldehyd. Als mindestens eine sekundäre Aminogruppe aufweisendes Amin geeignet sind einerseits Amine mit mindestens zwei sekundären Aminogruppen, insbesondere Piperazin, 2,5- und 2,6-Dimethylpiperazin, 2,3,5,6-Tetramethylpiperazin, 1,7-Dioxa-4,10-diazacyclododecan, N,N'-Dibutylethylendiamin; N,N'-Di-tert.butyl-ethylendiamin, N,N'-Dimethyl-1,6-hexandiamin, N,N'-Diethyl-1,6-hexandiamin, N,N'-Dimethyl-diethylentriamin, N,N'-Dimethyl-dipropylentriamin, 1-(1-Methylethyl-amino)-3-(1-methylethyl-aminomethyl)-3,5,5-trimethylcyclohexan (Jefflink® 754 von Huntsman), N4-Cyclohexyl-2-methyl-N2-(2-methylpropyl)-2,4-pentandiamin, N,N'-Dialkyl-1,3-xylylendiamin, Bis-(4-(N-alkylamino)-cyclohexyl)-methan, 4,4'-Trimethylendipiperidin und N-alkylierte Polyetheramine, beispielsweise Jeffamine®-SD-231 (von Huntsman); weiterhin Amine mit einer Hydroxylgruppe und einer sekundären Aminogruppe, insbesondere N-(2-Hydroxyethyl)-piperazin, 4-Hydroxy-piperidin, sowie monoalkoxylierte primäre Monoamine, wie insbesondere N-Methyl-ethanolamin, N-Ethyl-ethanolamin, N-Butylethanolamin und N-Butyl-isopropanolamin; weiterhin Amine mit einer Mercaptogruppe und einer sekundären Aminogruppe, insbesondere N-(2-Mercaptoethyl)-piperazin, 4-Mercapto-piperidin und 2-Mercaptoethyl-butylamin.

Weiterhin bevorzugt handelt es sich bei der Verbindung **V** in hydrolytisch freisetzbarer Form um ein Oxazolidin. Ein solches Oxazolidin ist insbesondere erhältlich aus der Kondensationsreaktion von mindestens einem Hydroxyamin, in welchem die Hydroxyl- und die primäre oder sekundäre Aminogruppe durch einen, gegebenenfalls substituierten, Ethylen- oder Propylenrest getrennt sind, mit mindestens einem Aldehyd, insbesondere Formaldehyd oder einem der oben genannten enolisierbaren Aldehyde. Besonders geeignet sind 2-Methylpropanal und 2-Ethylhexanal. Als Hydroxyamin geeignet sind insbesondere Diethanolamin und Diisopropanolamin, die zu Hydroxyoxazolidinen führen, aus welchen leicht Polyoxazolidine hergestellt werden können, beispielsweise durch Umsetzung mit einem Polyisocyanat oder einem Polyester.
Geeignete kommerzielle Oxazolidine sind beispielsweise Härter OZ und Desmophen® VP LS 2959 (von Bayer), Zoldine® ZA-78 und Zoldine® ZE (von Dow Chemical), Zoldine® RD-4 und Zoldine® RD-20 (von Angus Chemie), sowie Incozol® 2, Incozol® 3, Incozol® LV, Incozol® 4, Incozol® HP, Incozol® CF, Incozol® NC und Incozol® K (von Incorez).

In einer bevorzugten Ausführungsform der erfindungsgemässen Haftvermittlerzusammensetzung ist die Verbindung **V** in hydrolytisch freisetzbarer Form in der Haftvermittlerzusammensetzung enthalten. Als Verbindungen, welche die Verbindung **V** nach der Hydrolyse freisetzen, sind Aldimine, Enamine und Oxazolidine meist bevorzugt.

Diese bevorzugte Ausführungsform hat den Vorteil, dass die Verbindung **V** bei der Anwendung der Haftvermittlerzusammensetzung verzögert freigesetzt wird und dadurch eine ungestörte Aushärtung des Epoxid-Festharzes mit dem Polyamin gewährleistet.

Die erfindungsgemässe Haftvermittlerzusammensetzung enthält bevorzugt weitere Inhaltsstoffe, wie sie in Haftvermittlerzusammensetzungen üblich und beispielsweise in WO 2008/037780 beschrieben sind, insbesondere Verbindungen, wie sie darin beschrieben sind als Epoxysilan ES oder ESx, Aminosilane AS oder ASx oder Mercaptosilane MS.
Besonders bevorzugt enthält die Haftvermittlerzusammensetzung Silane, gegebenenfalls zumindest teilweise in Form ihrer Siloxane, sowie Pigmente. Bevorzugte Silane sind Epoxysilane, insbesondere 3-Glycidoxypropylsilane, und Aminosilane, insbesondere 3-Aminopropylsilane und N-(2-Aminoethyl)-3-aminopropylsilane, Addukte aus Epoxysilanen und Aminosilanen, sowie Mercaptosilane, insbesondere 3-Mercaptopropylsilane.
Bevorzugte Pigmente sind Eisenpigmente und insbesondere Russ.

Die erfindungsgemässe Haftvermittlerzusammensetzung wird insbesondere als Zweikomponentensystem eingesetzt, wobei die wässrige Dispersion des Epoxid-Festharzes in der ersten Komponente und das Polyamin in der zweiten Komponente enthalten sind. Die Verbindung **V** kann in der ersten oder in der zweiten Komponente oder in beiden Komponenten enthalten sein. Gegebenenfalls kann die Verbindung **V** auch als separate Komponente, d.h. als dritte Komponente, gehandhabt werden. Falls sie in der zweiten Komponente enthalten ist, reagiert sie zumindest teilweise mit Aminogruppen des Polyamins, wobei die entsprechenden Kondensationsprodukte entstehen.

Bevorzugt ist die Haftvermittlerzusammensetzung eine zweikomponentige Haftvermittlerzusammensetzung bestehend aus
einer ersten Komponente **K1** enthaltend
- mindestens eine wässrige Dispersion eines Epoxid-Festharzes; sowie
- mindestens eine Verbindung **V** in freier oder hydrolytisch freisetzbarer Form, welche mit dem Polyamin eine Kondensationsreaktion eingehen kann; und
einer zweiten Komponente **K2** enthaltend
- mindestens ein Polyamin.

Weiterhin bevorzugt ist die Haftvermittlerzusammensetzung eine zweikomponentige Haftvermittlerzusammensetzung bestehend aus einer ersten Komponente **K1** enthaltend
- mindestens eine wässrige Dispersion eines Epoxid-Festharzes; und
einer zweiten Komponente **K2** enthaltend
- mindestens ein Polyamin; sowie
- mindestens eine Verbindung **V** in hydrolytisch freisetzbarer Form, welche mit dem Polyamin eine Kondensationsreaktion eingehen kann.

Die einzelnen Komponenten werden nach der Herstellung typischerweise getrennt voneinander in dichte Verpackungen verpackt. Die einzelnen Komponenten sind getrennt voneinander lagerstabil. Die Lagerung der erfindungsgemässen Haftvermittlerzusammensetzung erfolgt insbesondere bei Temperaturen im Bereich von 5 bis 30°C. Dies gewährleistet die Stabilität der wässrigen Dispersion des Epoxid-Festharzes.

Weiterhin betrifft die vorliegende Erfindung die Verwendung einer Haftvermittlerzusammensetzung, wie sie vorhergehend beschrieben worden ist, als Voranstrich für Klebstoffe, Dichtstoffe oder Beschichtungen. Die Verwendung einer derartigen Haftvermittlerzusammensetzung verbessert die Haftung des Klebstoffs, Dichtstoffs oder der Beschichtung bei feuchtwarmen Bedingungen, insbesondere nach Kataplasma-Lagerung. Vorzugsweise wird die Haftvermittlerzusammensetzung als Voranstrich für Kleb- oder Dichtstoffe verwendet.

Die Applikation der erfindungsgemässen Haftvermittlerzusammensetzung erfolgt typischerweise mittels Tuch, Filz, Rolle, Sprühen, Schwamm, Pinsel, Tauchbeschichten oder dergleichen und kann sowohl manuell als auch mittels Roboter erfolgen.
Handelt es sich bei der Haftvermittlerzusammensetzung um eine mehrkomponentige Haftvermittlerzusammensetzung, erfolgt vor oder während der Applikation das Mischen der Komponenten.

Nach der Applikation erfolgt üblicherweise das Ablüften der Haftvermittlerzusammensetzung. Das Ablüften kann unter atmosphärischen Bedingungen oder allenfalls bei erhöhter Temperatur, Unterdruck und/oder durch Anblasen mit einem Gas erfolgen, was zu einer Verkürzung der Ablüftzeit führen kann.

Die erfindungsgemässe Haftvermittlerzusammensetzung eignet sich für verschiedenartige Substrate wie beispielsweise Metalle und Legierungen, insbesondere Stähle, Aluminium und Buntmetalle sowie deren Legierungen, Beton, Mörtel, Backstein, Klinker, Naturstein, Glas, Glaskeramik, Holz und Kunststoffe wie Polystyrol. Als Substrate bevorzugt sind anorganische Substrate, insbesondere Glas und Glaskeramik sowie Beton und Mörtel. Die Substrate können bei Bedarf vor dem Applizieren der erfindungsgemässen Haftvermittlerzusammensetzung vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln.

Als Kleb- oder Dichtstoff kann grundsätzlich jeder übliche Kleb- oder Dichtstoff verwendet werden. Insbesondere handelt es sich dabei um einen feuchtigkeitshärtenden Kleb- oder Dichtstoff.
Geeignete Kleb- und Dichstoffe sind insbesondere Polyurethankleb- und -dichtstoffe, insbesondere solche, welche Isocyanatgruppen aufweisende Polyurethanpolymere enthalten.
Weiterhin eignet sich die erfindungsgemässe Haftvermittlerzusammensetzung insbesondere auch für silanvernetzende Kleb- und Dichtstoffe.

Besonders geeignet ist die erfindungsgemässe Haftvermittlerzusammensetzung für elastische feuchtigkeitshärtende Klebstoffe, wie sie unter den Produktelinien Sikaflex® und SikaBond® von Sika Schweiz AG kommerziell vertrieben werden.

Bevorzugte Anwendungsgebiete der erfindungsgemässen Haftvermittlerzusammensetzung liegen in der Bau- und Fertigungsindustrie sowie im Fahrzeugbau, insbesondere zur Fugenabdichtung, Parkettverklebung, Anbauteilverklebung, Nahtabdichtung, Hohlraumversiegelung, Montage, Karosserieverklebung, Scheibenverklebung und dergleichen.

Artikel, welche aus dem Verkleben, Abdichten oder Beschichten eines Substrats unter Verwendung einer erfindungsgemässen Haftvermittlerzusammensetzung hervorgehen, sind beispielsweise Bauwerke, insbesondere Bauwerke des Hoch- oder Tiefbaus, Transportmittel, beispielsweise Fahrzeuge, insbesondere Automobile, Busse, Lastkraftwagen, Schienenfahrzeuge oder Schiffe, oder Anbauteile davon. Bevorzugt wird die erfindungsgemässe Haftvermittlerzusammensetzung eingesetzt für elastische Verklebungen im Fahrzeugbau, wie beispielsweise das Ankleben von Teilen, wie Kunststoffabdeckungen, Zierleisten, Flansche, Stossstangen, Führerkabinen oder andere Anbauteile, an die lackierte Karosserie eines Transportmittels, oder das Einkleben von Scheiben in die Karosserie.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Herstellung von Verbindungen V

### Verbindung V1:

100 g eines Polypropylenglykols (PPG 400; Voranol® P400, Dow) wurden in einem Kolben mit 80 g tert.Butylacetoacetat vermischt und die Mischung unter Rühren und Vakuum auf 130°C erwärmt, bis in der Vorlage kein tert.Butanol mehr kondensierte (ca. 4 Stunden). Ausbeute: 138 g.

### Verbindung V2:

Kommerzielles Oxazolidin Incozol® 2 (von Incorez).

### Herstellung der Haftvermittlerzusammensetzungen

**Beispiele 1** (nicht erfinderisch) und 2 Als Komponente **K1** wurde mit Ancarez™ AR555 (von Air Products; 55 Gew.-% Festkörpergehalt) eine kommerzielle wässrige Dispersion eines Epoxid-Festharzes eingesetzt.

Als Komponente **K2** wurde mit Anquamine® 419 (von Air Products; 60 Gew.-% Festkörpergehalt) ein kommerzieller wässriger Aminhärter eingesetzt, der mit deionisiertem Wasser auf einen Festkörpergehalt von 17 Gew.-% verdünnt wurde.

Für jedes Beispiel wurde jeweils zu einer der beiden Komponenten **K1** oder **K2** gemäss Tabelle 1 eine Verbindung **V** zugegeben.

**Tabelle 1. Haftvermittlerzusammensetzungen (Mengenangaben in Gewichtsteilen)**

| | Referenz | **Beispiel 1** | **Beispiel 2** |
|---|---|---|---|
| Komponente **K1** | | | |
| Ancarez™ AR555 | 50 | 48.5 | 50 |
| Verbindung V1 | | 1.5 | |

| Komponente **K2** | | | |
|---|---|---|---|
| Anquamine® 419 | 14.2 | 14.2 | 12.8 |
| deionis. Wasser | 35.8 | 35.8 | 32.2 |
| Verbindung V2 | | | 5 |

### Herstellung von Verklebungen

Zur Applikation der Haftvermittlerzusammensetzungen wurden für jedes Beispiel jeweils 50 Gewichtsteile der Komponente **K1** und 50 Gewichtsteile der Komponente **K2** zusammengemischt, die Mischung mittels eines damit getränkten Filzes auf das Substrat (Floatglas von Rocholl GmbH, Deutschland; Zinnseite) aufgetragen und während 60 Minuten im "Normklima" (23±1 °C, 50±5% relative Luftfeuchtigkeit) abgelüftet.

Auf das so vorbehandelte Substrat wurde der kommerzielle einkomponentige Polyurethanklebstoff Sikaflex®-221 (von Sika Schweiz AG) mittels einer Kartuschenpistole als Dreiecksraupe im Normklima aufgetragen. Der Klebstoff wurde nach einer Aushärtezeit von 7 Tagen im Normklima ("RT") sowie nach einer anschliessenden Kataplasma-Lagerung von 7 Tagen ("CP") auf Haftung geprüft.

Die Haftung des Klebstoffs wurde mittels Raupentest bestimmt. Hierbei wird die Raupe am Ende knapp über der Klebefläche eingeschnitten. Das eingeschnittene Ende der Raupe wird mit einer Rundzange festgehalten und vom Untergrund gezogen. Dies geschieht durch vorsichtiges Aufrollen der Raupe auf die Zangenspitze, sowie Plazieren eines Schnittes senkrecht zur Raupenziehrichtung bis auf den blanken Untergrund. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebstoff (Kohäsionsbruch). Die Bewertung der Hafteigenschaften erfolgt durch visuelle Bestimmung des kohäsiven Anteils der Haftfläche in Prozenten. Der Zusatz "P" in der Wertung bezeichnet dabei eine Ablösung des Haftvermittlers bzw. Primers vom Untergrund oder einen kohäsiven Bruch im Haftvermittler. Je höher der Anteil an kohäsivem Bruch im Klebstoff ist, umso besser wird die Verklebung eingeschätzt. Testresultate mit Kohäsionsbrüchen von weniger als 50%, insbesondere weniger als 40%, gelten als ungenügend.

Die Ergebnisse sind in der Tabelle 2 angegeben.

**Tabelle 2. Haftungsergebnisse**

| | Haftung nach RT | Haftung nach CP |
|---|---|---|
| Referenz | 100 | 0P |
| **Beispiel 1** | 100 | 100 |
| **Beispiel 2** | 100 | 90P |

## Patentansprüche

1. Haftvermittlerzusammensetzung enthaltend
- mindestens eine wässrige Dispersion eines Epoxid-Festharzes;
- mindestens ein Polyamin; sowie
- mindestens eine Verbindung **V** in hydrolytisch freisetzbarer Form, welche mit dem Polyamin eine Kondensationsreaktion eingehen kann, **dadurch gekennzeichnet, dass** die Haftvermittlerzusammensetzung als Zweikomponentensystem eingesetzt wird, wobei die wässrige Dispersion des Epoxid-Festharzes in der ersten Komponente und das Polyamin in der zweiten Komponente enthalten sind, wobei die Verbindung, welche die Verbindung **V** nach der Hydrolyse freisetzt, ein Aldimin, ein Enamin oder ein Oxazolidin ist.

2. Haftvermittlerzusammensetzung gemäss Anspruch 1, **dadurch gekennzeichnet, dass** die wässrige Dispersion eines Epoxid-Festharzes einen Gehalt an Epoxid-Festharz von 30 bis 80 Gew.-% aufweist.

3. Haftvermittlerzusammensetzung gemäss einem der Ansprüche 1 oder 2, **dadurch gekennzeichnet, dass** die mittlere Teilchengrösse der dispergierten Partikel aus Epoxid-Festharz in der Dispersion im Bereich von 0.05 bis 20 µm liegt.

4. Haftvermittlerzusammensetzung gemäss einem der vorhergehenden Ansprüche, **dadurch gekennzeichnet, dass** der Anteil der wässrigen Dispersion eines Epoxid-Festharzes 30 bis 99 Gew.-% bezogen auf die gesamte Haftvermittlerzusammensetzung beträgt.

5. Haftvermittlerzusammensetzung gemäss einem der vorhergehenden Ansprüche, **dadurch gekennzeichnet, dass** der Anteil des Polyamins so gewählt, dass in der Haftvermittlerzusammensetzung ein Verhältnis von Aminogruppen zu Epoxidgruppen im Bereich von 0.1:1 bis 1:1 zustande kommt.

6. Haftvermittlerzusammensetzung gemäss einem der vorhergehenden Ansprüche, **dadurch gekennzeichnet, dass** der Anteil der Verbindung **V** 0.1 bis 10 Gew.-% bezogen auf die gesamte Haftvermittlerzusammensetzung beträgt.

7. Haftvermittlerzusammensetzung gemäss einem der Ansprüche 1 bis 6, **dadurch gekennzeichnet, dass** die Haftvermittlerzusammensetzung eine zweikomponentige Haftvermittlerzusammensetzung ist, bestehend aus einer ersten Komponente **K1** enthaltend
- mindestens eine wässrige Dispersion eines Epoxid-Festharzes; sowie
- mindestens eine Verbindung **V** in hydrolytisch freisetzbarer Form, welche mit dem Polyamin eine Kondensationsreaktion eingehen kann; und
einer zweiten Komponente **K2** enthaltend
- mindestens ein Polyamin.

8. Haftvermittlerzusammensetzung gemäss einem der Ansprüche 1 bis 6, **dadurch gekennzeichnet, dass** die Haftvermittlerzusammensetzung eine zweikomponentige Haftvermittlerzusammensetzung ist, bestehend aus einer ersten Komponente **K1** enthaltend
- mindestens eine wässrige Dispersion eines Epoxid-Festharzes; und
einer zweiten Komponente **K2** enthaltend
- mindestens ein Polyamin; sowie
- mindestens eine Verbindung **V** in hydrolytisch freisetzbarer Form, welche mit dem Polyamin eine Kondensationsreaktion eingehen kann.

9. Verwendung einer Haftvermittlerzusammensetzung gemäss einem der Ansprüche 1 bis 8 als Voranstrich für Klebstoffe, Dichtstoffe oder Beschichtungen.

10. Verwendung gemäss Anspruch 9, **dadurch gekennzeichnet, dass** der Kleb- oder Dichtstoff ein Polyurethankleb- und -dichtstoff ist.

## Claims

1. An adhesion promoter composition, containing
- at least one aqueous dispersion of a solid epoxy resin;
- at least one polyamine; and
- at least one compound V in hydrolytically releasable form, which can enter into a condensation reaction with the polyamine, **characterized in that** the adhesion promoter composition is used as a two-component system, wherein the aqueous dispersion of the solid epoxy resin is present in the first component and the polyamine in the second component, wherein the compound that releases Compound V after hydrolysis is an aldimine, an enamine, or an oxazolidine..

2. The adhesion promoter composition according to claim 1, **characterized in that** the aqueous dispersion of a solid epoxy resin exhibits a content of solid epoxy resin from 30 to 80% by weight.

3. The adhesion promoter composition according to any one of claims 1 and 2, **characterized in that** the average particle size of the dispersed particles of solid epoxy resin in the dispersion is in the range of 0.05 to 20 µm.

4. The adhesion promoter composition according to any one of the preceding claims, **characterized in that** the proportion of the aqueous dispersion of a solid epoxy resin is 30 to 99% by weight, based on the total adhesion promoter composition.

5. The adhesion promoter composition according to any one of the preceding claims, **characterized in that** the proportion of the polyamine is selected so that a ratio of amino groups to epoxy groups occurs in the range of 0.1:1 to 1:1 in the adhesion promoter composition.

6. The adhesion promoter composition according to any one of the preceding claims, **characterized in that** the proportion of Compound V is 0.1 to 10% by weight, based on the total adhesion promoter composition.

7. The adhesion promoter composition according to any one of claims 1 to 6, **characterized in that** the adhesion promoter composition is a two-component adhesion promoter composition consisting of a first component K1, containing
- at least one aqueous dispersion of a solid epoxy resin; and
- at least one Compound V in hydrolytically releasable form, which can enter into a condensation reaction with the polyamine; and
a second component K2, containing
- at least one polyamine.

8. The adhesion promoter composition according to any one of claims 1 to 6, **characterized in that** the adhesion promoter composition is a two-component adhesion promoter composition consisting of a first component K1, containing
- at least one aqueous dispersion of a solid epoxy resin; and
a second component K2, containing
- at least one polyamine; and
- at least one Compound V in hydrolytically releasable form which can enter into a condensation reaction with the polyamine.

9. Use of an adhesion promoter composition according to any one of claims 1 to 8 as an undercoat for adhesives, sealants, or coatings.

10. The use according to claim 9, **characterized in that** the adhesive or sealant is a polyurethane adhesive and sealant.

## Revendications

1. Composition de promoteur d'adhésion, contenant :
- au moins une dispersion aqueuse d'une résine solide époxyde ;
- au moins une polyamine ; et
- au moins un composé **V** sous forme libérable hydrolytiquement, qui peut réaliser une réaction de condensation avec la polyamine,
**caractérisée en ce que** la composition de promoteur d'adhésion est utilisée sous la forme d'un système bicomposant, la dispersion aqueuse de la résine solide époxyde étant contenue dans le premier composant et la polyamine dans le second composant, le composé qui libère le composé **V** après l'hydrolyse étant une aldimine, une énamine ou une oxazolidine.

2. Composition de promoteur d'adhésion selon la revendication 1, **caractérisée en ce que** la dispersion aqueuse d'une résine solide époxyde présente une teneur en résine solide époxyde de 30 à 80 % en poids.

3. Composition de promoteur d'adhésion selon l'une quelconque des revendications 1 ou 2, **caractérisée en ce que** la taille de particule moyenne des particules dispersées de résine solide époxyde dans la dispersion se situe dans la plage allant de 0,05 à 20 µm.

4. Composition de promoteur d'adhésion selon l'une quelconque des revendications précédentes, **caractérisée en ce que** la proportion de la dispersion aqueuse d'une résine solide époxyde est de 30 à 99 % en poids, par rapport à la composition de promoteur d'adhésion totale.

5. Composition de promoteur d'adhésion selon l'une quelconque des revendications précédentes, **caractérisée en ce que** la proportion de la polyamine est choisie de telle sorte qu'un rapport entre les groupes amino et les groupes époxyde dans la composition de promoteur d'adhésion soit dans la plage allant de 0,1:1 à 1:1.

6. Composition de promoteur d'adhésion selon l'une quelconque des revendications précédentes, **caractérisée en ce que** la proportion du composé **V** est de 0,1 à 10 % en poids, par rapport à la composition de promoteur d'adhésion totale.

7. Composition de promoteur d'adhésion selon l'une quelconque des revendications 1 à 6, **caractérisée en ce que** la composition de promoteur d'adhésion est une composition de promoteur d'adhésion bicomposante, constituée par un premier composant **K1** contenant :
- au moins une dispersion aqueuse d'une résine solide époxyde ; et
- au moins un composé **V** sous forme libérable hydrolytiquement, qui peut réaliser une réaction de condensation avec la polyamine ;
et
un second composant **K2** contenant :
- au moins une polyamine.

8. Composition de promoteur d'adhésion selon l'une quelconque des revendications 1 à 6, **caractérisée en ce que** la composition de promoteur d'adhésion est une composition de promoteur d'adhésion bicomposante, constituée par un premier composant **K1** contenant :
- au moins une dispersion aqueuse d'une résine solide époxyde ; et
un second composant **K2** contenant :
- au moins une polyamine ; et
- au moins un composé **V** sous forme libérable hydrolytiquement, qui peut réaliser une réaction de condensation avec la polyamine.

9. Utilisation d'une composition de promoteur d'adhésion selon l'une quelconque des revendications 1 à 8 en tant qu'agent primaire pour adhésifs, agents d'étanchéité ou revêtements.

10. Utilisation selon la revendication 9, **caractérisée en ce que** l'adhésif ou l'agent d'étanchéité est un adhésif ou un agent d'étanchéité polyuréthane.
